# EUROPÄISCHE PATENTANMELDUNG

(11) **EP 0 551 855 A1**
(43) Veröffentlichungstag der Anmeldung: **21.07.1993**
(21) Anmeldenummer: 93100295.0
(22) Anmeldetag: 11.01.1993
(51) Int. Cl.: C09K 21/14, C08K 3/00

(54) **Feuerhemmende Masse**

(30) Priorität: 10.01.1992 DE 4200458
(71) Anmelder: FLAM-X Gesellschaft für Brandschutz Technologie mbH & Co. KG, D-82205 Gilching (DE)
(72) Erfinder: Mader, Heinz. B., W-8031 Gilching (DE); Halder, Albert Heinz, W-8850 Donauwörth (DE)
(74) Vertreter: Leonhard, Frank Reimund, Dipl.-Ing.

(57) **Zusammenfassung**

Es ist eine feuerhemmende Masse zur Herstellung elastisch verformbarer oder flexibler Beschichtungen, Ummantelungen, Polster- oder Formkörper oder dgl. vorgesehen, die aus einer gummielastischen Masse und einem handelsüblichen Löschpulver für die Brandklassen A, B, C besteht.

## Beschreibung

Die Erfindung betrifft eine feuerhemmende Masse zur Herstellung elastisch verformbarer oder flexibler Beschichtungen, Ummantelungen, Polster- oder Formkörper oder dergleichen.

Für Bereiche und Anwendungsfälle, bei denen Fragen des Feuerschutzes eine wichtige Rolle spielen, sind Werkstoffe und daraus herstellbare Bauteile oder dergleichen entwickelt worden, die sich jedoch in der Praxis nur begrenzt für den Einsatz in kritischen Bereichen eignen. Viele von diesen Werkstoffen sind nur für bestimmte Gefährdungsbereiche bzw. Brandklassen geeignet und verlieren häufig schon nach kurzer Hitze- oder Flammeinwirkung ihre feuerhemmende Eigenschaft und/oder entwickeln bei Hitze- oder Flammeinwirkung giftige Dämpfe oder Rauch.

In dem deutschen Patent 40 27 678 ist eine kalt- oder warmhärtbare Kunststoffmasse zur Herstellung von unbrennbaren Formkörpern und feuerhemmenden Beschichtungen von feuergefährdeten Unterlagen und Bauteilen vorgesehen, die aus einem Duroplast und wenigstens 50 Gew.-% - bezogen auf die Kunststoffmasse - aus einem trockenen, pulverförmigen Füllstoff aus gegenüber Flammen löschaktiven Teilchen besteht. Dabei sind Pulvermischungen geeignet, die Kalium- und/oder Natriumhydrogenkarbonate und/oder Kaliumsulfate enthalten. Es können auch Pulver auf der Basis von KHCO₃ und Harnstoff für die Brandklassen B und C eingesetzt werden, bei denen es um brennbare flüssige Stoffe bzw. um ggf. unter Druck austretende gasförmige Stoffe geht. Hierfür und zusätzlich für die Brandklasse A, bei der es um sowohl Flammen-als auch glutbildende feste Stoffe organischer Natur geht, kann das Pulver auch aus Gemischen aus Ammoniumphosphat und Ammoniumsulfat bestehen. Besonders geeignet sind solche Pulver mit extrem kleinen löschaktiven Pulverteilchen, welche in extrem großer Zahl pro Volumeneinheit Vorliegen.

Aus dieser bekannten kalt- oder warmhärtbaren Kunststoffmasse lassen sich mehr oder weniger starre Formkörper und feuerhemmende Beschichtungen auf starren Unterlagen herstellen.

In feuergefährdeten Bereichen sind in aller Regel jedoch zahlreiche andere Ausstattungsgegenstände oder dgl. vorhanden, die aus flexiblem Material bestehen oder die mehr oder weniger elastische Eigenschaften aufweisen müssen.

Es ist Aufgabe der Erfindung eine feuerhemmende Masse zur Herstellung elastisch verformbarer oder flexibler Beschichtungen, Ummantelungen, Polster- oder Formkörper oder dgl. vorzusehen, die sich in weiten Bereichen einsetzen läßt, hohe Flexibilität und/oder Elastizität gewährleistet, gute feuerhemmende Eigenschaften auch bei längerer Flammeinwirkung aufweist und bei Hitze- oder Feuereinwirkung keine schädlichen Dämpfe oder Rauchgase in einem schädigenden Umfange freisetzt.

Diese Aufgabe wird durch die Lehre des Anspruchs 1 oder die Lehre des Anspruchs 2 gelöst.

Als Füllstoff werden die zuvor im Zusammenhang mit der DE-PS 40 27 678 genannten pulverförmigen Füllstoffe bevorzugt eingesetzt.

Die nach Anspruch 1 verwendete Silikonmasse kann aus der Gruppe der Silikonkautschuke ausgewählt werden, welche als Grundpolymere Polydiorganosiloxane enthalten, und die nicht schon an der Luft aushärten.

Als Silikone können heiß- und kaltvulkanisierende Silikonkautschukmassen eingesetzt werden. Mischungsverhältnisse, bei denen die Silikonmasse einen höheren Gewichtsanteil als der pulverförmige Füllstoff enthält, werden bevorzugt, insb. wegen der leichteren Verarbeitbarkeit durch Gießen oder dergleichen. Als terpolymere Massen können vor allem EPDM-Kautschuke auf der Basis: Ethylen, Hexadien us. eingesetzt werden. Für einige Einsatzfälle sind aber auch Naturkautschukmassen geeignet. Es können bedarfsweise auch Mischungen solcher Kautschukmassen eingesetzt werden.

Die aufgeführten Massen eignen sich besonders als flexible Beschichtungen, z.B. für die Unterseite von Teppichbelägen oder dgl. in feuergefährdeten Räumen. Überhaupt kann die Masse in ihrer fließfähigen Einstellung als Beschichtung für alle textilen Materialien bis hin zu Glasfasergeweben verwendet werden. Die Bindung der Masse an der flexiblen textilen Unterlage ist vor allem eine Strukturbindung, da die fließfähige Masse in die Poren des Textilmaterials eindringt. Auf diese Weise können Vorhänge oder Polsterüberzüge ebenso wie Teppiche oder dekorative Wandbespannungen feuerhemmend ausgerüstet werden. Die fließfähige Masse eignet sich auch besonders für die Herstellung von Profilelementen, wie Dichtungsprofilen.

Bei Auswahl einer entsprechenden flexiblen Unterlage kann die Masse auch als Beschichtung für eine Feuerschutzplane verwendet werden, die im Brandfalle zum Schutze von Personen oder empfindlichen Geräten oder dgl. vielfältig eingesetzt werden kann.

Bei Steigerung des Anteils an pulverförmigem Füllstoff bis hin zum maximalen Verhältnis von 1:1 verliert die Masse ihre Gießfähigkeit. Sie kann dann nur noch gespachtelt werden.

Bedarfsweise kann die Masse auch einen Anteil an einem H₂O abspaltenden Vermekulitpulver enthalten. Der Anteil an Vermekulit sollte jedoch 15 Gew.-% nicht übersteigen. Enthält die Masse Vermekulit, so teilt sich der Rest der Masse in dem vorher gegebenen Verhältnisbereich auf die Silikonmasse und den Füllstoff in Form von ABC-Pulver auf.

Es hat sich als zweckmäßig erwiesen, daß der in den Kautschukmassen gegebenenfalls erforderliche Härteranteil bei zunehmendem Anteil an Vermekulitpulver gesteigert wird. Ohne Vermekulitpulver kann der Härteranteil z.B. 3 Gew.-% der Gesamtmasse betragen. Mit zunehendem Vermekulitpulver bis hin zu 15 Gew.-% wird dann der Härteranteil zweckmäßigerweise bis auf etwa 4 Gew.-% gesteigert.

Aus der Masse lassen sich auch Formkörper herstellen. Diese sind nicht nur in effektiver Weise feuerhemmend, sondern bilden zugleich elastische und flexible Polster- oder Dämmkörper. So können in feuergefährdeten Bereichen Rohr- oder Kabelummäntelungen aus dieser Masse hergestellt werden. Ebenso ist es möglich, Polsterungen für Möbel oder wärme- und geräuschdämmende Auskleidungen in Fahrzeugen, insb. öffentlichen Fahrzeugen oder für öffentliche Räume herzustellen. Diese können zusätzlich mit einem aus der gleichen Masse beschichteten Textilmaterial überzogen sein.

Besonders vorteilhaft lassen sich in brandgefährdeten Bereichen profilierte Dichtelemente aus diesen Massen herstellen und einsetzen. Solche Profildichtungen lassen sich z.B. bei Brandschutztüren, aber auch bei Fenstern, Klappen, Abdeckungen oder dgl. anwenden, ebenso als Ersatz für übliche Dichtelemente, z.B. bei Triebwerken.

Es hat sich gezeigt, daß die Masse bzw. daraus hergestellte Produkte oder Überzüge bei besonders intensiver Hitze- und Flammeneinwirkung entflammbar sind, aber nur bei fortgesetzter Energiezufuhr von außen eine gewisse Zeit noch weiterbrennen, sonst aber selbstlöschend sind.

Das kann z.B. bei Silikonkautschuk wohl darauf zurückgeführt werden, daß das Silikon oberflächlich abbrennt, der Füllstoff jedoch die Flammen erstickt. So kann sich eine selbst wieder feuerhemmend wirkende dünne Abbrandschicht bilden, die ein Entflammen der tieferliegenden Werkstoffschicht erschwert oder ausschließt.

## Patentansprüche

1. Feuerhemmende Masse zur Herstellung elastisch verformbarer oder flexibler Beschichtungen, Ummantelungen, Formkörper, Polsterkörper oder dgl., **gekennzeichnet** durch eine Mischung aus einer gummielastischen Silikonmasse und einem pulverförmigen Füllstoff aus gegenüber Flammen löschaktiven Teilchen, wobei diese Anteile in der Gesamtmasse im Verhältnis von Silikonmasse zu Füllstoff zwischen 50:50 für eine spachtelbare und bis zu 70:30 für eine gießbare Masse vorliegen.

2. Feuerhemmende Masse zur Herstellung elastisch verformbarer oder flexibler Beschichtungen, Ummantelungen, Formkörper, Polsterkörper oder dgl., **gekennzeichnet** durch eine Mischung aus terpolymeren oder natürlichen Kautschukmassen und einem pulverförmigen Füllstoff aus gegenüber Flammen löschaktiven Teilchen, wobei diese Anteile in der Gesamtmasse im Verhältnis Kautschukmasse zu Füllstoff zwischen 50:50 für eine spachtelbare und bis zu 70:30 für eine gießbare Masse vorliegen.

3. Feuerhemmende Masse nach Anspruch 1 oder 2, **dadurch gekennzeichnet,** daß der Füllstoff ein handelsübliches, für ausgewählte oder alle Brandklassen geeignetees Löschpulver enthält.

4. Feuerhemmende Masse nach einem der Ansprüche 1 bis 4, **dadurch gekennzeichnet,** daß sie zusätzlich einen Anteil von 0 Gew.-% bis maximal 15 Gew.-% eines bei Hitze- oder Flammeinwirkung H₂O abstpaltenden Tonmineralpulvers, insb. Vermekulitpulver enthält.

5. Feuerhemmende Masse nach Anspruch 4, **dadurch gekennzeichnet,** daß ein Härteranteil der Silikonmasse mit zunehmendem Anteil an Vermekulit gesteigert wird, insb. von etwa 3 Gew.-% bis auf etwa 4 Gew.-% bei dem maximalen Anteil an Vermekulitpulver.

6. Feuerhemmende Masse nach einem der Ansprüche 2 bis 5, **dadurch gekennzeichnet,** daß die terpolymere Kautschukmasse ein EPDM-Kautschuk ist.

7. Verwendung einer Masse nach einem der Ansprüche 1 bis 6, als profiliertes Dichtelement an Fenstern, Türen, Klappen oder dergleichen.

8. Verwendung einer Mischung aus einer gummielastischen Silikon-, Natur-oder EPDM-Kautschukmasse oder einer Mischung aus Kautschukmassen dieser Typen und einem handelsüblichen, für ausgewählte oder alle Brandklassen geeignetem Löschpulver im Gewichtsverhältnis zwischen 50:50 bis 70:30 zur Tränkung oder Beschichtung von flexiblen Feuerschutzplanen.
